# Europäisches Patentamt

(19) **European Patent Office**

**Office européen des brevets**

(11) Veröffentlichungsnummer: **0 151 691**
**B1**

(12) ## EUROPÄISCHE PATENTSCHRIFT

(45) Veröffentlichungstag der Patentschrift:
**13.05.87**

(21) Anmeldenummer: **84112431.6**

(22) Anmeldetag: **16.10.84**

(51) Int. Cl.⁴: **C 08 L 15/00, C 08 L 23/08,**
**C 08 L 31/04 // (C08L15/00,**
23:08),(C08L23/08,
15:00),(C08L15/00,
31:04),(C08L31/04, 15:00)

(54) **Polymermischungen und daraus hergestellte Covulkanisate.**

(30) Priorität: **29.10.83 DE 3339385**

(43) Veröffentlichungstag der Anmeldung:
**21.08.85 Patentblatt 85/34**

(45) Bekanntmachung des Hinweises auf die Patenterteilung:
**13.05.87 Patentblatt 87/20**

(84) Benannte Vertragsstaaten:
**DE FR GB IT**

(56) Entgegenhaltungen:
**DE - A - 1 420 148**
**DE - A - 3 245 468**
**FR - A - 2 527 218**
**US - A - 4 309 332**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Buding, Hartmuth, Dr., Liebermannstrasse 1, D 4047 Dormagen 1 (DE)**
Erfinder: **Königshofen, Heinrich, Dr., Am Mühlenberg 26, D 5060 Bergisch-Gladbach 2 (DE)**
Erfinder: **Szentiványi, Zsolt, Dr., Carl-Rumpff-Strasse 9, D 5090 Leverkusen 1 (DE)**
Erfinder: **Thörmer, Joachim, Dr., Emil-Nolde-Strasse 39, D 5090 Leverkusen 1 (DE)**

**Beschreibung**

Die Erfindung betrifft vulkanisierbare Polymermischungen aus Ethen-Vinylacetat-Copolymerisaten (EVA) und weitgehend gesättigten, nitrilgruppenhaltigen Elastomeren und die daraus durch radikalische Vernetzung hergestellten Covulkanisate.

EVA ist ein Kautschuk, der witterungsfest, beständig gegen Chemikalien, Dampf und heisses Wasser ist und eine geringe Quellung in Kohlenwasserstoffen zeigt. Er wird durch Copolymerisation von Ethylen, Vinylacetat und gegebenenfalls Acrylsäureester erhalten und kann mit Hilfe von Peroxiden oder energiereicher Strahlung radikalisch vernetzt werden.

EVA-Kautschuk ist beispielsweise in den deutschen Offenlegungsschriften 1 495 767 und 2 437 490 beschrieben.

Weitgehend gesättigte, nitrilgruppenhaltige Elastomere werden beispielsweise durch Hydrieren von Nitrilkautschuken (Butadien-Acrylnitril-Copolymerisaten) erhalten. Ihre Vulkanisate zeichnen sich durch hohe Festigkeit aus.

Solche Elastomere sind beispielsweise aus der US-PS 3 700 637 und den deutschen Offenlegungsschriften 2 539 132 und 2 913 992 bekannt.

Es wurde nun überraschend gefunden, dass sich aus EVA und weitgehend gesättigten, nitrilgruppenhaltigen Elastomeren homogene Mischungen mit überraschenden Eigenschaften herstellen lassen, die radikalisch zu Covulkanisaten vernetzt werden können. Es hat sich nämlich gezeigt, dass die Dichten der Mischungen sich nicht additiv aus den Dichten der Komponenten zusammensetzen, sondern unerwartet höher sind.

Gegenstand der Erfindung sind daher Mischungen aus (a) 95 bis 5 Gew.-%, vorzugsweise 60 bis 10 Gew.-% EVA-Kautschuk und (b) 5 bis 95 Gew.-%, vorzugsweise 40 bis 90 Gew.-% nitrilgruppenhaltigen Elastomeren mit 25 bis 140 Nitrilstickstoffatomen auf 1000 Kohlenstoffatome und weniger als 35 Doppelbindungen, vorzugsweise weniger als 12 Doppelbindungen und insbesondere weniger als 2 Doppelbindungen auf 1000 Kohlenstoffatome, sowie (c) üblichen Mischungsbestandteilen, wobei sich die Prozentangaben auf die Summe aus (a) und (b) beziehen.

Ein weiterer Gegenstand der Erfindung sind Covulkanisate, die durch radikalische Vernetzung aus den vorstehend genannten Mischungen erhalten werden.

EVA-Kautschuk besteht vorzugsweise aus 25 bis 70 Gew.-% Ethen, 30 bis 75 Gew.-% Vinylacetat und 0 bis 45 Gew.-% eines Acrylsäureesters, insbesondere eines Acrylsäure-$C_1$-$C_4$-alkylesters, vorzugsweise auf 70 bis 50 Gew.-% Ethen und 30 bis 50 Gew.-% Vinylacetat. Die Molekulargewichte $M_w$ betragen 100 000 bis 1 000 000.

Bei der Herstellung der weitgehend gesättigten, nitrilgruppenhaltigen Elastomeren geht man vorzugsweise von Nitrilkautschuken aus 10 bis 50 Gew.-% (Meth)acrylnitril, 50 bis 90 Gew.-% eines konjugierten Diens mit 4 bis 9 C-Atomen und 0 bis 30 Gew.-% eines dritten Monomers, beispielsweise (Meth)acrylsäure, (Meth)acrylsäurealkylester oder Vinylacetat aus, die z.B. gemäss DE-OS 2 539 132 hydriert werden.

Vorzugsweise bestehen die Nitrilkautschuke aus 48 bis 15 Gew.-% Acrylnitril und 52 bis 85 Gew.-% Butadien oder Isopren.

Übliche Mischungsbestandteile einer Kautschukmischung sind dem Fachmann bekannt; es handelt sich beispielsweise um Füllstoffe, Weichmacher, Alterungschutzmittel und Vulkanisationschemikalien, wobei für die Vulkanisation der erfindungsgemässen Kautschukmischung Peroxide verwendet werden, sofern die Vulkanisation nicht durch Strahlenvernetzung bewirkt wird.

Geeignete Peroxide sind z.B. Dialkylperoxide, Ketalperoxide, Aralkylperoxide, Peroxiether, Peroxiester. Bevorzugt werden Di-tert.-butylperoxid, Bis-(tert.-butylperoxiisopropyl-benzol), Dicumylperoxid, 2,5-Dimethyl-2,5-di-(tert.-butylperoxi)-hexan, 2,5-Dimethyl-2,5-di-(tert.-butylperoxi)-hexen-(3), 1,1-Bis-(tert.-butylperoxi)-3,3,5-trimethylcyclohexan, Benzoylperoxid, tert.-Butylcumylperoxid oder tert.-Butylperbenzoat verwendet.

Die Peroxidmengen betragen 1 bis 15 Gew.-%, vorzugsweise 2 bis 6 Gew.-%, bezogen auf Kautschukfeststoff.

Als energiereiche Strahlung zur Vernetzung kommt insbesondere energiereiche elektromagnetische Strahlung, wie Röntgen- oder γ-Strahlung und Elektronenstrahlung in Frage.

Die Covulkanisate zeigen gute mechanische Eigenschaften, gute Ölbeständigkeit, gute Flammwidrigkeit und geringe Rauchdichte bei Entzündung. Sie eignen sich z.B. zur Herstellung von Kabelmänteln und Transportbanddecken, insbesondere in Anwendungsbereichen mit speziellen Anforderungen, wie Beständigkeit gegen Ölquellung und/oder Wasserquellung.

*Beispiel*

Die folgenden Mischungen werden in einem 1,3-l-Laborkneter bei 30°C, einem Füllgrad von 100% mit 30 Upm und 6 bar Stempeldruck hergestellt:

|  | Gewichtsteile | | | | |
|  | A | B | C | D | E |
|---|---|---|---|---|---|
| HNBR* | 100 | 90 | 50 | 10 | 0 |
| EVA** | 0 | 10 | 50 | 90 | 100 |
| Polycarbodiimid (50 gew.%ig) | 0 | 0,3 | 1,5 | 2,7 | 3 |
| Magnesiumoxid | 2 | 2 | 2 | 2 | 2 |

Fortsetzung Tabelle

| | Gewichtsteile | | | | |
| --- | --- | --- | --- | --- | --- |
| | A | B | C | D | E |
| Aluminiumoxihydrat (BET Oberfläche 12 m²/g | 80 | 80 | 80 | 80 | 80 |
| Vinylsilan | 2 | 2 | 2 | 2 | 2 |
| Aluminiumoxihydrat (BET Oberfläche 6 m²/g) | 80 | 80 | 80 | 80 | 80 |
| Tripropylenglykol | 2 | 2 | 2 | 2 | 2 |
| Zinkborat | 10 | 10 | 10 | 10 | 10 |
| Magnesiumcarbonat | 20 | 20 | 20 | 20 | 20 |
| styrolisiertes Diphenylamin | 1 | 1 | 1 | 1 | 1 |
| Triallylcyanurat (80 gew.%ig) | 3 | 2,8 | 2 | 1,2 | 1,0 |
| Bis-(tert.-butylperoxiisopropyl-benzol (40 gew.%ig) | 10 | 9,6 | 8 | 6.4 | 6,0 |
| Dichte [g/cm³] | 1,545-1,561 | 1,562-1,566 | 1,574-1,577 | 1,586-1,589 | 1,591-1,594 |

   * Hydriertes Acrylnitril-Butadien-Copolimarisat mit einem Acrylnitrilgehalt von 34 Gew.-%, einem Hydrierungs-grad von > 99% und einer Mooney-Viskosität ML 100°C (1 + 4) von 70 ME.

** Ethen-Vinylacetat-Copolymer aus 50 Gew.-% Ethen und 50 Gew.-% Vinylacetat mit einer Mooney-Viskosität ML 100°C (1 + 4) von 20 ME.

Die Mischung wird 5 Minuten bei 190°C vulkanisiert. Folgende Werte wurden gefunden:

| | A | B | C | D | E |
| --- | --- | --- | --- | --- | --- |
| F [MPa] | 18,0 | 19,0 | 17,0 | 14,5 | 13,0 |
| D [%] | 125 | 145 | 100 | 100 | 115 |
| $M_{100}$ [MPa] | 15,5 | 14,4 | 17,0 | 14,5 | 12,5 |
| $H_{20}$ [Shore A] | 87 | 86 | 87 | 84 | 84 |
| Weiterreisswiderstand nach DIN 53 507 VDE | 2,7 | 4,0 | 5,8 | 3,3 | 3,3 |
| Sauerstoffindex ASTM D 2863 | 33,5 | 33,5 | 37,7 | 38,0 | 40,0 |
| Rauchgasdichte ohne Zündflamme | 234 | 231 | 251 | 250 | 286 |
| Wasserquellung 7 d/70°C; $\triangle$ G [%] | 2,1 | 3,2 | 4,5 | 7,5 | 9,4 |
| Quellung in ASTM-Öl III 24 h/100°C; $\triangle$ G [%] | 4,8 | 6,4 | 14,0 | 25,8 | 30,6 |

**Patentansprüche**

1. Mischungen aus (a) 95 bis 5 Gew.-% EVA und (b) 5 bis 95 Gew.-% eines nitrilgruppenhaltigen Elastomeren mit 25 bis 140 Nitrilstickstoffatomen und weniger als 35 Doppelbindungen auf 1000 Kohlen-stoffatomen sowie (c) üblichen Mischungsbestand-teilen, wobei sich die Prozentangaben auf die Summe aus (a) und (b) beziehen.

2. Mischungen nach Anspruch 1 aus 60 bis 10 Gew.-% (a) und 40 bis 90 Gew.-% (b).

3. Mischungen nach Anspruch 1, wobei (b) weniger als 12 Doppelbindungen auf 1000 Kohlenstoffatome enthält.

4. Mischungen nach Anspruch 1, wobei (b) weniger als 2 Doppelbindungen auf 1000 Kohlenstoffatome enthält.

5. Covulkanisate aus den Mischungen nach Anspruch 1, erhalten durch radikalische Vernetzung.

6. Kabelmäntel aus den Mischungen nach Anspruch 1, erhalten durch radikalische Vernetzung.

## Claims

1. Mixtures of (a) 95 to 5% by weight of EVA and (b) 5 to 95% by weight of a nitrile-group-containing elastomer containing 25 to 140 nitrile nitrogen atoms and less than 35 double bonds per 1000 carbon atoms and (c) customary mixture components, the percentage relating to the total of (a) and (b).

2. Mixtures according to Claim 1 of 60 to 10% by weight of (a) and 40 to 90% by weight of (b).

3. Mixtures according to Claim 1, in which (b) contains less than 12 double bonds per 1000 carbon atoms.

4. Mixtures according to Claim 1, in which (b) contains less than 2 double bonds per 1000 carbon atoms.

5. Covulcanisates obtained from the mixtures according to Claim 1 by radical cross-linking.

6. Cable sheaths obtained from the mixtures according to Claim 1 by radical cross-linking.

## Revendications

1. Mélanges de (a) 95 à 5% en poids d'EVA et (b) 5 à 95% en poids d'un élastomère à groupes nitriles ayant 25 à 140 atomes d'azote de nitrile et moins de 35 doubles liaisons pour 1000 atomes de carbone ainsi que (c) des constituants de mélange habituels, les pourcentages étant rapportés à la somme de (a) et (b).

2. Mélanges selon la revendication 1, de 60 à 10% en poids de (a) et 40 à 90% en poids de (b).

3. Mélanges selon la revendication 1, dans lesquels (b) contient moins de 12 doubles liaisons pour 1000 atomes de carbone.

4. Mélanges selon la revendication 1, dans lesquels (b) contient moins de 2 doubles liaisons pour 1000 atomes de carbone.

5. Co-vulcanisats des mélanges selon la revendication 1, obtenus par réticulation radicalaire.

6. Gaines de câbles fabriquées à partir des mélanges selon la revendication 1, obtenues par réticulation radicalaire.